# EUROPÄISCHE PATENTANMELDUNG

(11) **EP 2 562 487 A1**
(43) Veröffentlichungstag der Anmeldung: **27.02.2013**
(21) Anmeldenummer: 11178674.5
(22) Anmeldetag: 24.08.2011
(51) Int. Cl.: F24J 2/52, E04D 1/12, E04D 1/34, H01L 31/048

(54) **Anordnung von mehreren Rahmen zur Halterung von plattenförmigen Elementen auf einer Oberfläche sowie Seitenprofil für einen Rahmen zur Verwendung in einer solchen Anordnung**

(71) Anmelder: Milboro Aktiengesellschaft, 9491 Ruggell (LI)
(72) Erfinder: Lechthaler, Andreas, 6710 Nenzing (AT)
(74) Vertreter: Patentbüro Paul Rosenich AG

(57) **Zusammenfassung**

Die Erfindung betrifft eine Anordnung (11) von mehreren Rahmen (16, 26) zur Halterung von Solarmodulen (15, 25), auf einer Oberfläche (12). Die Rahmen (16, 26) sind relativ zueinander schuppenartig überlappend angeordnet. Jeder Rahmen (16, 26) umfasst ein Querprofil (27) und zwei Seitenprofile (19, 29) um jeweils ein Solarmodul (15, 25) dreiseitig zu halten. Die Seitenprofile (19) des überlappenden Rahmens (16) weisen an ihrem dem Querprofil des gleichen Rahmens (16) abgewandten Endbereich eine Auflageseite (21) zur Auflage auf dem Querprofil (27) des nachfolgend angeordneten Rahmens (26) auf. An der Auflageseite (21) der Seitenprofile (19) ist jeweils eine Halteeinrichtung zur Abstützung des überlappenden Rahmens (16) an dem nachfolgend angeordneten Rahmen (26) vorgesehen. Weiter betrifft die Erfindung ein Seitenprofil (19) für einen Rahmen (16, 26) einer solchen Anordnung (11).

## Beschreibung

Die Erfindung bezieht sich auf eine Anordnung von mehreren Rahmen zur Halterung von plattenförmigen Elementen, insbesondere zur Halterung von Solarmodulen, auf einer Oberfläche, nach dem Oberbegriff des Anspruchs 1. Weiter bezieht sich die Erfindung auf ein Seitenprofil für einen Rahmen zur Halterung von plattenförmigen Elementen, insbesondere zur Halterung von Solarmodulen, zur Verwendung in einer solchen Anordnung, nach dem Oberbegriff des Anspruchs 9.

Solarmodule zur Strom- und/oder Warmwassererzeugung gewinnen zur Erhaltung der Versorgungssicherheit immer mehr an Bedeutung. Jedes Solarmodul wird beispielsweise mit einem Rahmen versehen. Mehrere gerahmte Solarmodule werden zu Solaranlagen zusammengefasst, welche auf Oberflächen angeordnet werden. In diesem Zusammenhang werden unter dem Begriff "Oberfläche" bei Freilandanlagen der Untergrund und bei Gebäuden z. B. Dachflächen oder Wandflächen verstanden.

Neben Solarmodulen als plattenförmige Elemente, können beispielsweise auch Fassadenelemente oder andere flächige Elemente, mit Anordnungen von mehreren Rahmen an Oberflächen angeordnet werden.

Bei Freilandanlagen oder bei Gebäuden werden die Anordnungen mit geeigneten Konstruktionen auf den entsprechenden Oberflächen vorgesehen. Dabei bleibt die bestehende Oberfläche, z. B. eine Ziegeleindeckung oder eine Fassadenverkleidung, bis auf die Auflagerungspunkte intakt, so dass keine oder nur geringe Anforderungen an die Ausgestaltung der Rahmen bzw. der gesamten Anordnung in Bezug auf den Schutz vor Witterungseinflüssen auf die Oberfläche bestehen.

Bei Gebäuden werden die Anordnungen auch immer öfter direkt in die Oberfläche, z. B. in eine Dachfläche insbesondere von Schrägdächern oder Giebeldächern, integriert. Eine derartige Anordnung wird auch als Indach-System bezeichnet und es besteht ein dringendes Bedürfnis in Bezug auf einen Schutz vor Witterungseinflüssen, insbesondere in Bezug auf eine dichte Ausgestaltung.

Aus der WO 00/02256 A1 ist eine Anordnung von mehreren Rahmen zur Halterung von plattenförmigen Elementen, insbesondere zur Halterung von Solarmodulen, auf einer Oberfläche bekannt. Die Rahmen sind relativ zueinander schuppenartig überlappend angeordnet. Jeder Rahmen umfasst ein Querprofil und zwei Seitenprofile um jeweils ein plattenförmiges Element dreiseitig zu halten, wobei die Seitenprofile des überlappenden Rahmens an ihrem dem Querprofil des gleichen Rahmens abgewandten Endbereich eine Auflageseite zur Auflage auf dem Querprofil des nachfolgend angeordneten Rahmens aufweisen. Die Seitenprofile weisen jeweils ein mit einem Querprofil in Anlage bringbares Anlageende und ein diesem Anlageende gegenüberliegenden Endbereich mit einer Auflageseite auf, die auf dem Querprofil des nachgeordneten Rahmens auflegbar ist. Das Querprofil des nachfolgend angeordneten Rahmens weist in einem in der WO 00/02256 A1 offenbarten Ausführungsbeispiel einen Abschnitt zum Stützen und Umfassen des plattenförmigen Elementes auf.

Nachteilig an dieser bekannten Lösung ist, dass bei einer Anordnung der Rahmen an einer schrägen Fläche, wie beispielsweise einer Dachfläche eines Schrägdachs, Anteile von über die Anordnung fliessenden Regenwasser oder Schwitzwasser an dem in Bezug auf die Falllinie der schrägen Fläche unteren Rand des Rahmens verbleibt. Es werden daher in diesem Bereich hohe Anforderungen an die Dichtigkeit gestellt. Diese Anforderungen sind über eine längere Gebrauchsdauer nur mit einem grossen technischen Aufwand sicherzustellen. Zudem können beispielsweise aufgrund auf die Anordnung einwirkender Witterungseinflüsse bei dem plattenförmigen Element und den Rahmenprofilen aufgrund der unterschiedlichen Materialeigenschaften Spannungen im Rahmen und somit der Anordnung auftreten, welche zu Schäden an der Anordnung und/oder an dem plattenförmigen Element führen.

Als Alternative zur vorgenannten Ausführungsform offenbart die WO 00/02256 A1 ebenfalls eine Anordnung von mehreren Rahmen, bei der das Querprofil des nachfolgend angeordneten Rahmens nur eine Stützfläche aufweist, um das plattenförmige Element, welches von dem überlappenden Rahmen gehalten wird, einzig auf der Rückseite zu stützen.

Nachteilig an dieser bekannten Lösung ist, dass durch Witterungseinflüsse, wie z. B. Sonneneinstrahlung, in der Anordnung beziehungsweise der Profile des Rahmens Längenänderungen auftreten. Dadurch wirken auf die Rückseite des plattenförmigen Elementes mechanisch Kräfte ein, welche insbesondere bei einem Solarmodul als plattenförmiges Element schädlich sind und zu dessen Ausfall führen können.

Aufgabe der vorliegenden Erfindung ist es somit, eine Anordnung von mehreren Rahmen zur Halterung von plattenförmigen Elementen, insbesondere zur Halterung von Solarmodulen, auf einer Oberfläche zu schaffen, welche die vorgenannten Nachteile nicht aufweist und welches, insbesondere wenn die Anordnung in eine Oberfläche integriert wird, über eine lange Gebrauchstauglichkeit eine hohe Dichtigkeit aufweist. Weiter ist es Aufgabe der vorliegenden Erfindung, ein Seitenprofil für einen Rahmen zur Halterung von plattenförmigen Elementen, insbesondere zur Halterung von Solarmodulen, zur Verwendung in einer solchen Anordnung zu schaffen, welches für diese Verwendung besonders geeignet ist.

Die erste Aufgabe wird durch die Merkmale des unabhängigen Anspruchs 1 gelöst. Vorteilhafte Weiterbildungen sind in den Figuren und in den abhängigen Patentansprüchen dargelegt.

Gemäss der Erfindung ist an der Auflageseite zumindest der Seitenprofile des überlappenden Rahmens jeweils zumindest eine Halteeinrichtung zur Abstützung des überlappenden Rahmens an dem nachfolgend angeordneten Rahmen vorgesehen.

Mit der an der Auflageseite des Seitenprofils angeordneten Halteeinrichtung wird im montierten Zustand der Anordnung sichergestellt, dass sämtliche auf einen Rahmen einwirkenden Kräfte nur auf den nachfolgend angeordneten Rahmen und nur über dessen Rahmenteile übertragen werden. Auf die von den Rahmen gehaltenen plattenförmigen Elemente selbst wirken keine Kräfte ein. Die Querprofile sind an der Unterkonstruktion der entsprechenden Oberfläche festgelegt, wodurch eine Ableitung der auf die Anordnung einwirkenden Kräfte in den Untergrund sichergestellt ist. Zudem ist der freie, überlappende Endbereich des plattenförmigen Elementes ungestützt. Daher wirken keine Kräfte auf die entsprechende Kante und/oder Rückseite des plattenförmigen Elementes ein. Dadurch ist die Funktionstüchtigkeit des plattenförmigen Elementes, insbesondere eines Solarmoduls, z. B. auch unter besonderen klimatischen Einflüssen gewährleistet.

Vorzugsweise ist die Halteeinrichtung für eine stützungsfreie Lagerung des plattenförmigen Elementes ausgebildet, was einen vorteilhaften Schutz des plattenförmigen Elementes vor schädigenden mechanischen Einflüssen durch den Rahmen beziehungsweise der Anordnung von mehreren Rahmen sicherstellt. Beispielsweise umfasst die Halteeinrichtung einen Beabstandungsabschnitt, welcher eine ausreichende Beabstandung des plattenförmigen Elementes von der entsprechenden Oberseite des Querprofils des nachfolgend angeordneten Rahmens sicherstellt.

Bevorzugt ist die Halteeinrichtung beabstandet zum freien Ende des dem Querprofil des gleichen Rahmens abgewandten Endbereichs des Seitenprofils angeordnet, womit eine ausreichende Überlappung der nacheinander angeordneten Rahmen gewährleistet ist. Entsprechend der für die Anwendung gewünschten Überlappung wird die Halteeinrichtung entsprechend beabstandet zum freien Ende an der Auflageseite des Seitenprofils vorgesehen.

Vorzugsweise umfasst die Halteeinrichtung ein Hakenteil, welches einen Halteabschnitt, der zur Auflageseite des Seitenprofils beabstandet und zu dieser bereichsweise verlaufend ist, sowie einen Verbindungsabschnitt aufweist, der den Halteabschnitt mit der Anlageseite des Seitenprofils verbindet und der an einem dem freien Ende des dem Querprofil des gleichen Rahmens abgewandten Endbereich des Seitenprofils abgewandten Abschnitt des Halteabschnitts vorgesehen ist. Das Hakenteil weist somit eine zum freien Ende des Seitenprofils offene Aufnahme auf und ermöglicht somit eine einfache Anordnung des Seitenprofils und somit des überlappenden Rahmens an einem Querprofil des nachfolgend angeordneten Rahmens. Durch die Ausgestaltung der einzelnen Abschnitte des Hakenteils ist die gewünschte Beabstandung des plattenförmigen Elementes von der entsprechenden Oberseite des Querprofils des nachfolgend angeordneten Rahmens gewährleistet.

Bevorzugt weist der Verbindungsabschnitt des Hakenteils zumindest bereichsweise einen in einem Radius gebogenen Abschnitt auf, womit bei der Anordnung des Seitenprofils beziehungsweise des Rahmens an einem nachfolgend angeordneten Rahmen dieses oder dieser sich selbstzentrierend ausrichtet.

Vorzugsweise weist der Querträger einen Auflageflansch mit einer Haltekante auf, welche von dem Hakenteil des entsprechenden Seitenprofils des überlappenden Rahmens zumindest bereichsweise umgreifbar ist, wodurch bei der Anordnung des Seitenprofils beziehungsweise des Rahmens an einem nachfolgend angeordneten Rahmen dieses oder dieser sich in vorteilhafter Weise selbstzentrierend ausrichtet.

Vorteilhaft weist die Haltekante eine Abrundung mit einem Radius auf, was eine einfache Anordnung des Seitenprofils beziehungsweise des Rahmens an einem nachfolgend angeordneten Rahmen ermöglicht.

Weiter vorteilhaft ist der Radius der Abrundung der Haltekante kleiner als der Radius des gebogenen Abschnitts des Verbindungsabschnitts, womit neben einer einfachen Anordnung des Seitenprofils beziehungsweise des Rahmens an einem nachfolgend angeordneten Rahmen des Hakenteils auch eine sichere Fixierung desselben unter Last gewährleistet ist.

Bevorzugt ist ein Dichtelement auf zumindest einem Querprofil angeordnet zur Abdichtung zwischen dem Querprofil und dem Endbereich des plattenförmigen Elementes, um insbesondere bei einer integrierten Anordnung in einer Oberfläche ein Eindringen z. B. von Wind und/oder von Regenwasser unter die Anordnung von mehreren Rahmen verhindert ist. Vorzugsweise ist das Dichtelement aus einem komprimierbaren Material gefertigt, womit eine sichere Abdichtung zwischen dem Querprofil und dem Endbereich des plattenförmigen Elementes gewährleistet ist. Das Dichtelement ist vorteilhaft kraft- und/oder formschlüssig an dem Querprofil festgelegt.

Vorzugsweise ist eine Ausnehmung zur Aufnahme des Dichtelementes an dem Querprofil vorgesehen, welche bei der Montage der Anordnung und während der Nutzungsdauer der Anordnung ein unabsichtliches Verschieben des Dichtelementes verhindert, was zu Undichtigkeiten führen könnte.

Die zweite Aufgabe wird durch ein Seitenprofil gelöst, das die Merkmale des unabhängigen Anspruchs 9 aufweist. Vorteilhafte Weiterbildungen sind in den Figuren und in den abhängigen Patentansprüchen dargelegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche bzw. ähnliche Bauteile.

Es zeigen dabei:
- Fig. 1: eine Anordnung von mehreren Rahmen zum Halten von mehreren plattenförmigen Elementen in einer perspektivischen Aufsicht;
- Fig. 2: einen Schnitt durch einen Abschnitt der Anordnung entlang Linie II-II in Fig. 1;
- Fig. 3: Detail A der Halteeinrichtung aus Fig. 2 in vergrösserter Darstellung;
- Fig. 4: einen Schnitt durch den oberen Abschluss der Anordnung entlang Linie IV-IV in Fig. 1;
- Fig. 5: einen Schnitt durch zwei sich überlappender Seitenprofile zweier benachbarter Rahmen entlang Linie V-V in Fig. 1;
- Fig. 6: einen Schnitt durch einen seitlichen Abschluss der Anordnung entlang Linie VI-VI in Fig. 1; und
- Fig. 7: einen Schnitt durch einen seitlichen Abschluss der Anordnung entlang Linie VII-VII in Fig. 1.

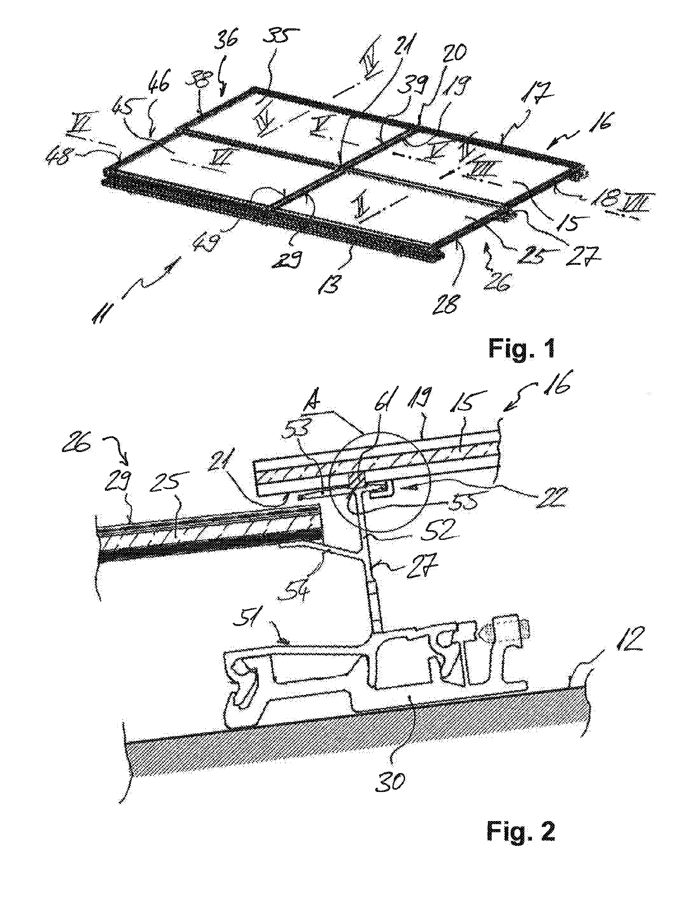

Die Figur 1 zeigt eine Anordnung 11 von mehreren Rahmen 16, 26, 36 und 46 zur Halterung von plattenförmigen Elementen, hier von Solarmodulen 15, 25, 35 und 45, auf einer Oberfläche 12. Die Rahmen 16 und 26 sowie die benachbart dazu angeordneten Rahmen 36 und 46 sind relativ zueinander schuppenartig überlappend in der Falllinie der Oberfläche 12 angeordnet. Es ist festzuhalten, dass die Anordnung 11 auch direkt in die Oberfläche 12 integriert sein kann.

Der Rahmen 16 weist ein Querprofil 17 und zwei Seitenprofile 18 und 19 auf, welche das Solarmodul 15 dreiseitig umfassen. Der Rahmen 26 weist ein Querprofil 27 und zwei Seitenprofile 28 und 29 auf, welche das Solarmodul 25 dreiseitig umfassen. Der Rahmen 36 weist ein Querprofil 37 und zwei Seitenprofile 38 und 39 auf, welche das Solarmodul 35 dreiseitig umfassen. Der Rahmen 46 weist ein Querprofil 47 und zwei Seitenprofile 48 und 49 auf, welche das Solarmodul 45 dreiseitig umfassen. Die Ausgestaltung der einzelnen Profile der Rahmen 16 und 26 sowie der Rahmen 36 und 46 ist jeweils identisch, wobei die einzelnen Profile nachfolgend noch detaillierter beschrieben werden.

Am vorderen Ende der Anordnung ist ein weiteres Querprofil 13 vorgesehen, welches im Wesentlichen analog des Querprofils 27 des Rahmens 26 ausgebildet ist.

Nachfolgend wird das in Figur 2 vergrössert dargestellte Querprofil 27 beschrieben. Die Querprofile 13, 17, 37 und 47 sind jedoch im Wesentlichen analog ausgebildet, so dass die nachfolgenden Ausführungen sinngemäss auch für diese Querprofile 13, 17, 37 und 47 gelten.

Das Querprofil 27 weist einen Anlageflansch 51 auf, der klemmend in einem, an der Oberfläche 12 festgelegten Verbindungselement 30 lösbar fixiert ist. Das Verbindungselement 30 sowie der Auflageflansch 51 des Querprofils 27 weisen die Merkmale auf, wie sie in der noch nicht veröffentlichten europäischen Patentanmeldung EP 11160457.5 der Anmelderin dargelegt sind. Der Inhalt der noch nicht veröffentlichten europäischen Patentanmeldung EP 11160457.5 der Anmelderin bildet, insbesondere in Bezug auf die Ausgestaltung des Verbindungselementes 30 und des Anlageflansches 51 des Querprofils 27 einen integrierten Bestandteil der vorliegenden Anmeldung.

Das Querprofils 27 weist einen, von dem Auflageflansch 51 abragenden Steg 52 auf, an dessen anderen Ende ein, im Wesentlichen parallel zum Auflageflansch 51 verlaufender, beidseitig von diesem abragender Auflageflansch 53 vorgesehen ist. Beabstandet zum Auflageflansch 53 ragt zudem ein Halteabschnitt 54 von dem Steg 52 ab, der eine Auflagefläche für das nachgeordnete Solarmodul 25 bildet. An der Seite des Auflageflansches 53, die dem Solarmodul 15 zugewandt ist, ist eine Ausnehmung 55 zur Anordnung eines Dichtelementes 61 vorgesehen. Das Dichtelement 61 dichtet den Raum zwischen dem Querprofil 27 und der Rückseite des Solarmoduls 15 ab und ist aus einem komprimierbaren Material gefertigt.

Alle Seitenprofile und somit auch das Seitenprofil 19 weisen ein mit einem Querprofil 17 in Anlage bringbares Anlageende 20 und ein diesem Anlageende 20 gegenüberliegenden Endbereich mit einer Auflageseite 21 zur Auflage auf dem Querprofil 27 des nachgeordneten Rahmens 26 auf. An der Auflageseite 21, beabstandet zu dem freien Ende des Endbereichs des Seitenprofils 19 ist eine Halteeinrichtung 22 vorgesehen zur Abstützung des überlappenden Rahmens 16 auf dem nachfolgend angeordneten Rahmen 26. Die Halteeinrichtung 22 ist für eine stützungsfreie Lagerung des Solarmoduls 15 ausgebildet.

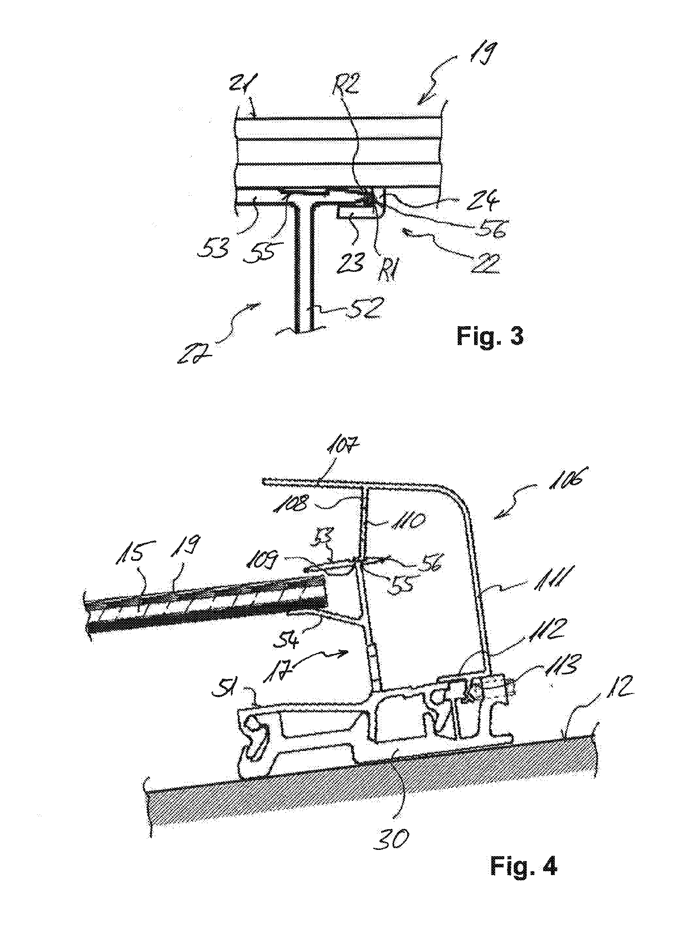

Wie insbesondere aus der Figur 3 ersichtlich, umfasst die Halteeinrichtung ein Hakenteil 22, welches einen Halteabschnitt 23, der zur Auflageseite 21 des Seitenprofils 19 beabstandet und zu dieser bereichsweise verlaufend ist, sowie einen Verbindungsabschnitt 24 aufweist, der den Halteabschnitt 23 mit der Anlageseite 21 des Seitenprofils 19 verbindet. Der Verbindungsabschnitt 24 ist an einem dem freien Ende des dem Querprofil 17 des gleichen Rahmens abgewandten Endbereich des Seitenprofils 19 abgewandten Abschnitt des Halteabschnitts 23 vorgesehen. Der Verbindungsabschnitt 24 weist bereichsweise einen in einem Radius R2 gebogenen Abschnitt auf.

Der Auflageflansch 53 des (entsprechenden) Querprofils 27 weist eine Haltekante 56 auf, welche von dem Hakenteil 22 des (entsprechenden) Seitenprofils 19 des überlappenden Rahmens 16 bereichsweise umgreifbar ist. Die Haltekante 56 weist eine Abrundung mit einem Radius R2 auf, der kleiner als der Radius R1 des gebogenen Abschnitts des Verbindungsabschnitts 24 des Hakenteils 22 ist.

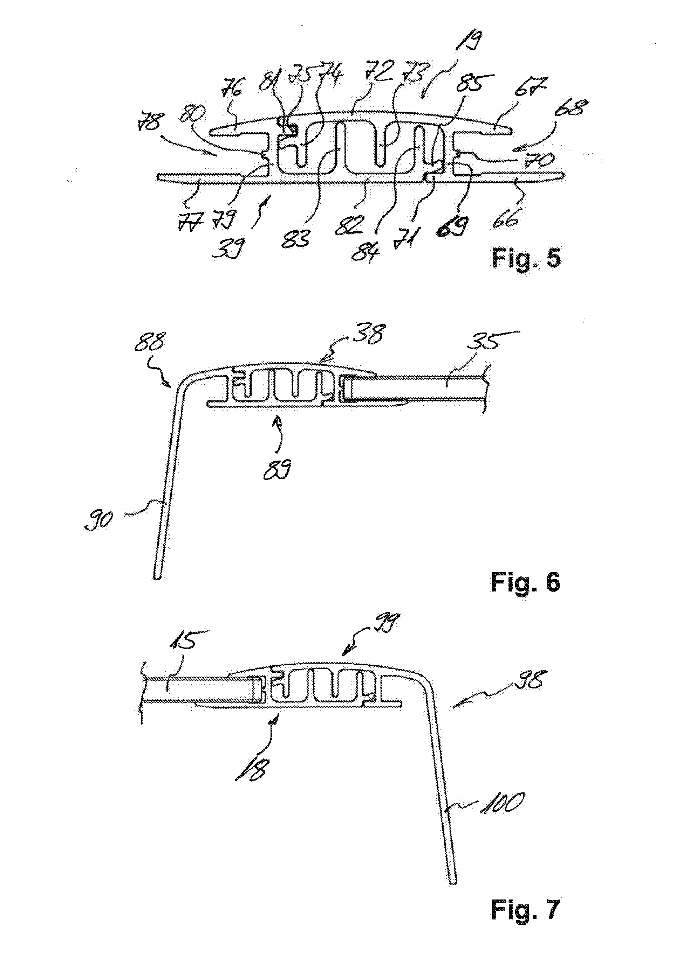

Wie in der Figur 5 dargestellt, weist das Seitenprofil 19 mehrere Abschnitte auf. Einerseits sind zwei im Wesentlichen parallel zueinander verlaufende Aufnahmeabschnitte 66 und 67 vorgesehen, welche eine Aufnahme 68 für das Solarmodul 15 bilden. Der die Aufnahmeabschnitte 66 und 67 verbindende Verbindungsabschnitt 69 weist an seiner zur Aufnahme 68 zugewandten Seite eine Haltenocke 70 auf. Zur Gewährleistung der Dichtigkeit kann in der Aufnahme 68 ein hier nicht dargestelltes Dichtelement vorgesehen sein, welches zwischen dem Verbindungsabschnitt 69 und dem Solarmodul 15 zu liegen kommt.

In der Verlängerung des Aufnahmeabschnitts 66 ist eine entgegengesetzt zur Aufnahme 68 abragende Nase 71 vorgesehen. In der Verlängerung des Aufnahmeabschnitts 67 ragt vom Verbindungsabschnitt 69 entgegengesetzt zur Aufnahme 68 ein Labyrinthabschnitt 72 ab. An dessen Unterseite ragen zwei zueinander beabstandete Dichtabschnitte 73 und 74 ab. Am freien Ende des Labyrinthabschnitts 72 ist zudem eine Aufnahme 75 vorgesehen.

Auch das Seitenprofil 39 weist mehrere Abschnitte auf. Einerseits sind zwei im Wesentlichen parallel zueinander verlaufende Aufnahmeabschnitte 76 und 77 vorgesehen, welche eine Aufnahme 78 für das Solarmodul 35 bilden. Der die Aufnahmeabschnitte 76 und 77 verbindende Verbindungsabschnitt 79 weist an seiner zur Aufnahme 78 zugewandten Seite eine Haltenocke 80 auf. Auch in der Aufnahme 78 kann ein hier nicht dargestelltes Dichtelement vorgesehen sein zur Gewährleistung der Dichtigkeit in diesem Bereich.

In der Verlängerung des Aufnahmeabschnitts 76 ist eine entgegengesetzt zur Aufnahme 78 abragende Nase 81 vorgesehen. Im montierten Zustand der Anordnung 11 kommt die Nase 81 des Seitenprofils 39 in der Aufnahme 75 des Seitenprofils 19 zu liegen.

In der Verlängerung des Aufnahmeabschnitts 77 ragt vom Verbindungsabschnitt 79, entgegengesetzt zur Aufnahme 78 ein Labyrinthabschnitt 82 ab. An dessen Unterseite ragen zwei zueinander beabstandete Dichtabschnitte 83 und 84 ab. Im montierten Zustand der Anordnung 11 bilden der Labyrinthabschnitt 82 des Seitenprofils 39 und der Labyrinthabschnitt 72 des Seitenprofils 19 eine Labyrinthdichtung, welche einen Eintritt von Wasser unterhalb der Anordnung 11 in diesem Verbindungsbereich verhindert.

Am freien Ende des Labyrinthabschnitts 82 ist zudem eine Haltenase 85 vorgesehen, welche im montierten Zustand der Anordnung 11 mit der abragenden Nase 71 des Seitenprofils 19 verriegelt.

Durch die vorgenannte Ausgestaltung der Seitenprofile 19 und 39 sind diese nach dem Zusammenführen über eine clipsartige Verbindung sicher miteinander verbunden.

Wie aus der Figur 6 ersichtlich, ist das Seitenprofil 38 analog dem Seitenprofil 19 ausgebildet ist. Als seitlicher Abschluss weist die Anordnung eine Seitenschürze 88 auf, welche einen Labyrinthabschnitt 89 aufweist, der analog dem Labyrinthabschnitt 82 des Seitenprofils 39 ausgebildet ist. Die Seitenschürze 88 ist mit dem Seitenprofil 38 durch einfaches Einclipsen verriegelbar. Weiter weist die Seitenschürze 88 einen von dem Labyrinthabschnitt 89 abragenden Seitenabschnitt 90 auf.

In Figur 7 ist ersichtlich, dass das Seitenprofil 18 analog dem Seitenprofil 39 ausgebildet ist. Als seitlicher Abschluss weist die Anordnung eine Seitenschürze 98 auf, welche einen Labyrinthabschnitt 99 aufweist, der analog dem Labyrinthabschnitt 72 des Seitenprofils 19 ausgebildet ist. Die Seitenschürze 98 ist mit dem Seitenprofil 18 durch einfaches Einclipsen verriegelbar. Weiter weist die Seitenschürze 98 einen von dem Labyrinthabschnitt 99 abragenden Seitenabschnitt 100 auf.

Der in Figur 4 gezeigte, obere Randabschluss der Anordnung 11 weist ein im Wesentlichen L-förmiges Abschlussprofil 106 auf mit einem ersten Abdeckabschnitt 107 und einem zweiten Abdeckabschnitt 111. Von dem ersten Abdeckabschnitt 107 ragt beabstandet von dessen freiem Ende ein Stützabschnitt 108 ab. Dessen freies Ende 109 kommt im montierten Zustand in der Ausnehmung 55 im Auflageflansch 53 des Querprofils 17 zu liegen. Der Stützabschnitt 108 weist vorteilhaft mehrere, zueinander beabstandete Belüftungsöffnungen 110 auf. Am freien Ende 112 des zweiten Abdeckabschnitts 111 ist ein Klemmabschnitt 113 vorgesehen, der in dem Verbindungselement 30 festlegbar ist.

Anstelle von zwei separaten, auf der gleichen Längsachse angeordneten Querprofilen 17 und 37 bzw. 27 und 47 kann alternativ jeweils ein durchlaufendes Querprofil vorgesehen sein.

Ein wesentlicher Vorteil der erfindungsgemässen Anordnung 11 liegt in der geringen Anzahl der einzelnen Profile, welche zu der Erstellung der Anordnung 11 benötigt wird. Für einen Rahmen 16, 26, 36 und 46 werden lediglich 3 Typen von Profilen benötigt. Zudem ist die Anordnung 11 einfach montierbar, was insbesondere bei steilen Dachflächen einen markanten Vorteil darstellt. Durch die Einfachheit der Montage kann die Anordnung 11 von Hilfspersonal erstellt werden, was sich bei den Kosten für deren Erstellung positiv niederschlägt.

### Bezugszeichenliste

- 11: Anordnung
- 12: Oberfläche
- 13: Querprofil

- 15: Solarmodul
- 16: Rahmen
- 17: Querprofil v. 16
- 18: Seitenprofil v. 16
- 19: Seitenprofil v. 16
- 20: Anlageende v. 19
- 21: Auflageseite v. 19
- 22: Hakenteil
- 23: Halteabschnitt v. 22
- 24: Verbindungsabschnitt v. 22
- 25: Solarmodul
- 26: Rahmen
- 27: Querprofil v. 26
- 28: Seitenprofil v. 26
- 29: Seitenprofil v. 26
- 30: Verbindungselement

- 35: Solarmodul
- 36: Rahmen
- 37: Querprofil v. 36
- 38: Seitenprofil v. 36
- 39: Seitenprofil v. 36

- 45: Solarmodul
- 46: Rahmen
- 47: Querprofil v. 46
- 48: Seitenprofil v. 46
- 49: Seitenprofil v. 46

- 51: Anlageabschnitt
- 52: Steg
- 53: Auflageflansch
- 54: Halteabschnitt
- 55: Ausnehmung
- 56: Haltekante
- 61: Dichtelement

- 66: Aufnahmeabschnitt v. 19
- 67: Aufnahmeabschnitt v. 19
- 68: Aufnahme f. 15
- 69: Verbindungsabschnitt v. 19
- 70: Haltenocke
- 71: Nase
- 72: Labyrinthabschnitt v. 19
- 73: Dichtabschnitt
- 74: Dichtabschnitt
- 75: Aufnahme
- 76: Aufnahmeabschnitt v. 39
- 77: Aufnahmeabschnitt v. 39
- 78: Aufnahme f. 35
- 79: Verbindungsabschnitt v. 39
- 80: Haltenocke
- 81: Nase
- 82: Labyrinthabschnitt v. 39
- 83: Dichtabschnitt
- 84: Dichtabschnitt
- 85: Haltenase

- R1: Radius v. 56
- R2: Radius v. 24
- 88: Seitenschürze
- 89: Labyrinthabschnitt v. 88
- 90: Seitenabschnitt v. 88

- 98: Seitenschürze
- 99: Labyrinthabschnitt v. 98
- 100: Seitenabschnitt v. 98

- 106: Abschlussprofil
- 107: 1. Abdeckabschnitt
- 108: Stützabschnitt
- 109: freies Ende v. 108
- 110: Belüftungsöffnung
- 111: 2. Abdeckabschnitt
- 112: freies Ende v. 111
- 113: Klemmabschnitt

## Patentansprüche

1. Anordnung von mehreren Rahmen (16, 26, 36, 46) zur Halterung von plattenförmigen Elementen, insbesondere zur Halterung von Solarmodulen (15, 25, 35, 45), auf einer Oberfläche (12), wobei die Rahmen (16, 26, 36, 46) relativ zueinander schuppenartig überlappend angeordnet sind und wobei jeder Rahmen (16, 26, 36, 46) ein Querprofil (17, 27, 37, 47) und zwei Seitenprofile (18, 19, 28, 29, 38, 39, 48, 49) umfasst, um jeweils ein plattenförmiges Element dreiseitig zu halten, wobei die Seitenprofile (18, 19, 38, 39) des überlappenden Rahmens (16, 36) an ihrem dem Querprofil (17, 37) des gleichen Rahmens (16, 36) abgewandten Endbereich eine Auflageseite (21) zur Auflage auf dem Querprofil (27, 47) des nachfolgend angeordneten Rahmens (26, 46) aufweisen, **dadurch gekennzeichnet, dass** an der Auflageseite (21) zumindest der Seitenprofile (18, 19, 28, 29, 38, 39, 48, 49) für den überlappenden Rahmen (16, 36) jeweils zumindest eine Halteeinrichtung zur Abstützung des überlappenden Rahmens (16, 36) an dem nachfolgend angeordneten Rahmen (26, 46) vorgesehen ist.

2. Anordnung nach Anspruch 1, **dadurch gekennzeichnet, dass** die Halteeinrichtung für eine stützungsfreie Lagerung des plattenförmigen Elementes ausgebildet ist.

3. Anordnung nach Anspruch 1 oder 2, **dadurch gekennzeichnet, dass** die Halteeinrichtung beabstandet zum freien Ende des dem Querprofil (17, 37) des gleichen Rahmens (16, 36) abgewandten Endbereichs des Seitenprofils (18, 19, 28, 29, 38, 39, 48, 49) angeordnet ist.

4. Anordnung nach einem der Ansprüche 1 bis 3, **dadurch gekennzeichnet, dass** die Halteeinrichtung ein Hakenteil (22) umfasst, welches einen Halteabschnitt (23), der zur Auflageseite (21) des Seitenprofils (18, 19, 28, 29, 38, 39, 48, 49) beabstandet und zu dieser bereichsweise verlaufend ist, sowie einen Verbindungsabschnitt (24) aufweist, der den Halteabschnitt (23) mit der Anlageseite (21) des Seitenprofils (18, 19, 28, 29, 38, 39, 48, 49) verbindet und der an einem dem freien Ende des dem Querprofil (17, 27, 37, 47) des gleichen Rahmens abgewandten Endbereich des Seitenprofils (18, 19, 28, 29, 38, 39, 48, 49) abgewandten Abschnitt des Halteabschnitts (23) vorgesehen ist.

5. Anordnung nach Anspruch 4, **dadurch gekennzeichnet, dass** der Verbindungsabschnitt (24) des Hakenteils (22) zumindest bereichsweise einen in einem Radius (R2) gebogenen Abschnitt aufweist.

6. Anordnung nach Anspruch 4 oder 5, **dadurch gekennzeichnet, dass** der Querträger (17, 27, 37, 47) einen Auflageflansch (53) mit einer Haltekante (56) aufweist, welcher von dem Hakenteil (22) des Seitenprofils (18, 19, 28, 29, 38, 39, 48, 49) des überlappenden Rahmens (16, 26, 36, 46) zumindest bereichsweise umgreifbar ist, wobei die Haltekante (56) vorteilhaft eine Abrundung mit einem Radius (R1) aufweist, der weiter vorteilhaft kleiner als der Radius (R2) des gebogenen Abschnitts des Verbindungsabschnitts (24) des Hakenteils (22) ist.

7. Anordnung nach einem der Ansprüche 1 bis 6, **dadurch gekennzeichnet, dass** ein Dichtelement (61), vorzugsweise aus einem komprimierbaren Material, auf zumindest einem Querprofil (27) angeordnet ist zur Abdichtung zwischen dem Querprofil (27) und der Rückseite des plattenförmigen Elementes.

8. Anordnung nach Anspruch 7, **dadurch gekennzeichnet, dass** eine Ausnehmung (55) zur Aufnahme des Dichtelementes (61) an dem Querprofil (27) vorgesehen ist.

9. Seitenprofil für einen Rahmen (16, 26, 36, 46) zur Halterung von plattenförmigen Elementen, insbesondere zur Halterung von Solarmodulen (15, 25, 35, 45), zur Verwendung in einer Anordnung (11) nach einem der Ansprüche 1 bis 8, wobei das Seitenprofil (18, 19, 28, 29, 38, 39, 48, 49) ein mit einem Querprofil (17, 27, 37, 47) in Anlage bringbares Anlageende (20) und einen diesem Anlageende (20) gegenüberliegenden Endbereich mit einer Auflageseite (21) zur Auflage auf einem Querprofil (27, 47) eines nachgeordneten Rahmens (26, 46) aufweist, **dadurch gekennzeichnet, dass** an der Auflageseite (21) des Seitenprofils (18, 19, 28, 29, 38, 39, 48, 49) zumindest eine Halteeinrichtung zur Abstützung des überlappenden Rahmens (16, 36) an dem nachfolgend angeordneten Rahmen (26, 46) vorgesehen ist.

10. Seitenprofil nach Anspruch 9, **dadurch gekennzeichnet, dass** die Halteeinrichtung für eine stützungsfreie Lagerung des plattenförmigen Elementes ausgebildet ist.

11. Seitenprofil nach Anspruch 9 oder 10, **dadurch gekennzeichnet, dass** die Halteeinrichtung beabstandet zum freien Ende des Endbereichs des Seitenprofils (18, 19, 28, 29, 38, 39, 48, 49) angeordnet ist.

12. Seitenprofil nach einem der Ansprüche 9 bis 11, **dadurch gekennzeichnet, dass** die Halteeinrichtung ein Hakenteil (22) umfasst, welches einen Halteabschnitt (23), der zur Auflageseite (21) des Seitenprofils (18, 19, 28, 29, 38, 39, 48, 49) beabstandet und zu dieser bereichsweise verlaufend ist, sowie einen Verbindungsabschnitt (24) aufweist, der den Halteabschnitt (23) mit der Anlageseite (21) des Seitenprofils (18, 19, 28, 29, 38, 39, 48, 49) verbindet und der an einem dem freien Ende des Endbereich des Seitenprofils (18, 19, 28, 29, 38, 39, 48, 49) abgewandten Abschnitt des Halteabschnitts (23) vorgesehen ist.

13. Seitenprofil nach Anspruch 12, **dadurch gekennzeichnet, dass** der Verbindungsabschnitt (24) des Hakenteils (22) zumindest bereichsweise einen in einem Radius (R1) gebogenen Abschnitt aufweist.
